# EUROPEAN PATENT SPECIFICATION

(11) **EP 1 457 047 B1**
(45) Date of publication and mention of the grant of the patent: **27.08.2008**
(21) Application number: 02805111.8
(22) Date of filing: 12.12.2002
(51) Int. Cl.: H04N 7/088, H04N 5/00

(54) **INTERNALLY GENERATED CLOSE CAPTIONING/TELE-TEXTING FOR SET-UP MENUS OF NETWORK-CAPABLE SIGNAL PROCESSING APPARATUS**
INTERN GENERIERTE BILDUNTERSCHRIFTEN BZW. TELETEXT FÜR EINRICHTMENÜS EINER SIGNALVERARBEITUNGSVORRICHTUNG MIT NETZWERKFÄHIGKEIT
SOUS-TITRAGE/TELETEXTE CODE GENERE DE MANIERE INTERNE ET DESTINE A DES MENUS DE REGLAGE D'APPAREIL DE TRAITEMENT DE SIGNAL POUVANT ETRE MIS EN RESEAU

(30) Priority: 18.12.2001 US 341663 P
(43) Date of publication of application: 15.09.2004
(73) Proprietor: Thomson Licensing, 92648 Boulogne Cedex (FR)
(72) Inventor: LIU, Xiaodong, Carmel, IN 46033 (US); JONES, Thomas, Herbert, Westfield, IN 46074 (US); WAHOSKE, Matthew, J, Fishers, IN 46038 (US)
(74) Representative: Patentanwälte Hofstetter, Schurack & Skora
(86) International application number: PCT/US2002/039747
(87) International publication number: WO 2003/053055

(56) References cited:
- EP-A- 1 014 720
- WO-A-00/46987

## Description

The present invention relates to techniques for configuring a network-capable signal processing apparatus such as a DSL set-top box, cable set-top box, and/or the like, with the help of closed caption and/or tele-text display.

Network-capable signal processing apparatuses such as DSL set-top boxes, cable set-top boxes, and/or the like generally have a limited size of flash-memory based boot ROM but have a relatively sufficient size RAM as the memory architecture. The boot ROM thus contains only very limited software that allows the apparatus to establish communication with the head-end service provider and other basic booting functions. The service provider will provide or will download the user-function-oriented application software to the apparatus typically through a broadband connection. After providing or downloading of the application software, which can be a couple of megabytes (MB) in size, the application software will start to run in the system RAM.

The first time that the apparatus is powered on in the end user site, the apparatus needs certain configuration parameters to communicate with the service provider. These parameters may include the service provider's host name, the virtual channel number, and/or other information. After these parameters are configured, the above-mentioned application software downloading process can be carried on at each power-on cycle.

In order to configure these parameters with the minimum size boot software (due to the limited size of the boot ROM), a very simple user interface should be provided. The user interface should also be able to take the user's parameter input and display the parameter in order to provide visual confirmation of such information. Another important consideration is that the user interface should not provide any possible access that may cause any network security problems such as MAC address modifications, DHCP parameter leasing time alteration and/or the like. Therefore, PC-oriented configuration methods are not recommended.

To consider the configuration process from the display aspect, this type of apparatus usually has a very complex graphic display mechanism and requires a very large amount of software, including a graphic library, font library, and/or the like to accomplish even a simple text display task. Obviously, to place these software components in the boot ROM or PROM software is impossible.

WO 00/46987 describes a monitor or TV receiver using a secondary analog signal path for displaying on-screen information signals from external sources: An external source outputs an analog signal containing on-screen information, which has been decoded in the external source, and an encoded high definition digital signal. A high definition television has separate inputs for the analog signal and the high definition digital signal, which is decoded in the high definition television to a format suitable for display on a high definition television monitor. Accordingly, both the on-screen information for the external source and the high definition signal are available for use and display on the high definition television monitor.

It would thus be desirable o have an apparatus that receives initial network parameters configuration data while utilizing only a small amount of boot PROM in order to conserve boot PROM space.

It would thus be further desirable to have an apparatus that allows the input of minimum initial network parameter configuration data via a set-up menu while utilizing only a small amount of boot PROM in order to conserve boot PROM space.

It would thus be yet further desirable to have an apparatus that generates set-up menu data displayable by a display device for input of minimum network parameter configuration data without the need for graphic and/or font library.

An apparatus, system, and/or method of use as described herein provide generated data to a display device for initial network parameter configuration data input of the apparatus. The apparatus, in one form, includes a text generator for input of initial network parameter configuration data therein that overcomes the problems discussed above. This system, apparatus and/or method require only a small amount of boot ROM or PROM to implement.

In one form the subject invention concerns an apparatus having means for receiving digital video data, means, coupled to the means for receiving digital video data, for converting the digital video data into an analog video signal, means for generating menu data that is displayable by a display device as a parameter set-up menu for assisting in the input of set-up parameters into the apparatus, and characteized by means, coupled to the means for generating menu data and the means for converting the digital video data, for inserting the menu data into a vertical blanking interval of the analog video signal.

In another form, the subject invention concerns a method of assisting in the input of set-up parameters into an apparatus. The method includes: (a) receiving incoming digital video data; (b) converting the digital video data into an analog video signal; and is characterized by (c) inserting menu data into a vertical blanking interval of the analog video signal, the menu data allowing a display device coupled to the apparatus to utilize the menu data to display a set-up menu for input of set-up parameters into the apparatus.

### In the drawings:

Fig. 1 is a simplified diagram of exemplary systems in which the subject invention may be utilized;
Fig. 2 is a block diagram of an exemplary digital apparatus in accordance with the principles described herein coupled to a display device;
Fig. 3 is a block diagram of another exemplary apparatus in accordance with the principles described herein;
Fig. 4 is an illustration of a display device showing an exemplary set-up menu as provided to the display device by the apparatus in accordance with the principles of the subject invention;
Fig. 5 is a flowchart of an exemplary manner of operation of the present apparatus or method of execution of the principles of the subject invention; and
Fig. 6 is a flowchart of another exemplary manner of operation of the present apparatus or method of execution of the principles of the subject invention.

Corresponding reference characters indicate corresponding parts throughout the several views.

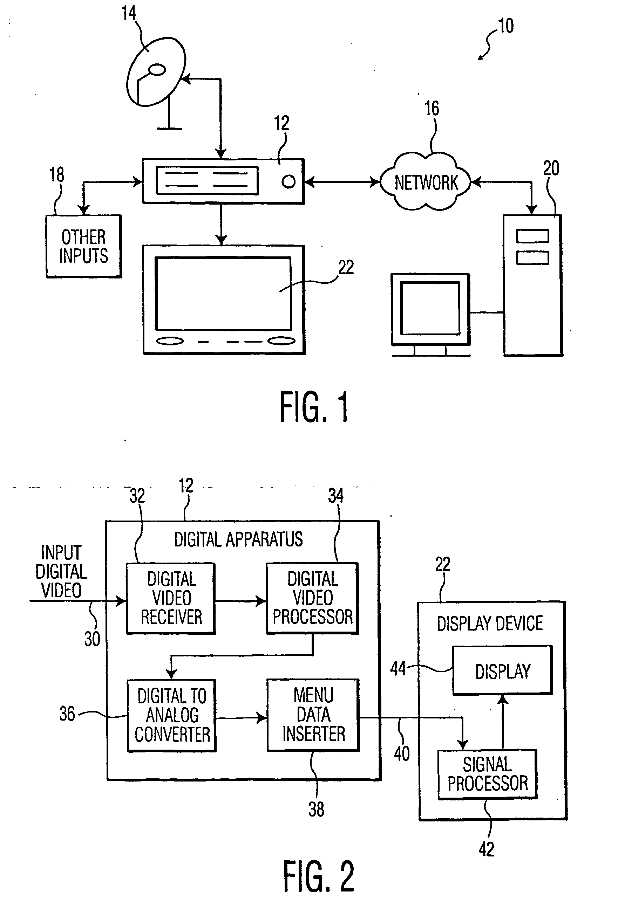

Referring now to Fig. 1, there is depicted a diagrammatic representation of an exemplary system, generally designated 10, in which the subject invention may be, and preferably is, used. It should be appreciated that the system 10 is only representative of a type of system in which the subject invention is applicable. The principles of the subject invention are, of course, applicable to other systems. The system 10 is generally a television or multi-media system.

The system 10 includes a digital apparatus 12 that is operative, adapted and/or configured to receive digital video signals from a variety of sources and process the digital video signals for presentation on a display or display device 22 coupled thereto. The digital apparatus 12 is particularly operative, adapted and/or configured to convert the incoming digital video signals into analog video signals for presentation on the display 22. It should be appreciated that the digital apparatus 12 is also preferably operative, adapted and/or configured to receive digital audio signals from a variety of sources and present the processed digital audio signals to an appropriate sound reproduction device (not particularly shown but which may be incorporated into the display device 22). The display device 22 may be a television, monitor or the like that can receive, process and/or display video signals (e.g. television video signals) and optionally receive, process and/or reproduce audio signals (e.g. television audio signals). In particular, the display device 22 is preferably operative, adapted and/or configured to receive and process the audio and video signals from the digital apparatus 12. Typically, the display device 22 receives and processes analog video and audio signals that have been generated by the digital apparatus 12 from input digital video and audio signals (i.e. television signals).

The digital apparatus 12 of the system 10 is thus shown having several signal inputs or signal sources. The signal inputs or sources will be described in connection with or in respect to video signals and, particularly but not necessarily, digital video signals. It should be appreciated that audio signals and analog audio/video signals may be received by the digital apparatus 12. The digital apparatus 12 is also operative in accordance with the principles presented herein with respect to incoming (input) analog signals rather than digital signals, or a combination of both. It is contemplated, however, that input signals to the digital device 12 are digital (both audio and video). Moreover, it is contemplated that the digital signals are in an MPEG format. Digital signals of other formats, however, are contemplated and may be used. Thus, while the below discussion is with respect to MPEG formatted digital signals, other digital format signals may be input to the digital apparatus 12. The digital apparatus 12 thus has the necessary circuitry/logic to accommodate receiving and processing digital signals in the manner described herein to accommodate the digital format. At the least, the digital apparatus includes circuitry/logic for a single digital format according to the digital format being utilized in a particular region, CATV system, satellite system, or the like.

A satellite receiver and/or transmitter 14 representing satellite television (e.g. direct broadcast satellite, DBS, or other satellite system) is depicted in the system 10 as one signal input/output to the digital apparatus 12. The two-headed arrow connecting the satellite 14 with the digital apparatus 12 represents possible two-way communication between the digital apparatus 12 and the satellite transceiver 14. In one form, the satellite antenna 14 is only a receiver of digital satellite signals and thus can only transmit the received digital satellite signals to the digital apparatus 12. In this case, there is no communication from the digital apparatus to the satellite dish 14 with respect to outgoing (broadcast) transmissions (as differentiated from any antenna control signals generated by the digital apparatus 12 and provided to the satellite antenna 14). In another form, the satellite antenna also provides transmitting capabilities in which case the two-headed arrow representing the connection between the digital apparatus 12 and the satellite antenna 14 is appropriate.

A network 16 representing a cable television (CATV) network, the Internet, DSL system, other broadband system, or the like is depicted in the system 10 as another signal input/output to the digital apparatus 12. The two-headed arrow connecting the network 16 with the digital apparatus 12 represents possible, and in this case preferably, two-way communication between the digital apparatus 12 and the network 16. A server 20 is also shown coupled to the network 16 which is also preferably in two-way communication with the network 16 as represented by the double-headed arrow depicted therebetween. The digital-apparatus 12 may also receive input signals from other signal sources as represented by the "other input(s)" box 18. As represented by the double-headed arrow depicted between the digital apparatus 12 and the other input(s) box 18, the digital apparatus 12 may only receive input signals from the other input(s) 18 or may receive input signals from the other input(s) 18 and provide output signals to the other input(s) 18. In one form, and as described further below, the network 16 and the server 20 represent a cable or CATV network having a head-end. The CATV system is preferably a digital cable system (i.e. provides its television/multi-media signals in a digital format), but may be an analog cable system (i.e. provides its television/multimedia signals in an analog format) or a digital/analog (hybrid) cable system. Also, the CATV system (digital apparatus 12, network 16, and server 20) is preferably, but not necessarily, operative, adapted and/or configured to provide two-way communication. It should thus be appreciated that while the below description of the subject invention is described in connection with the digital apparatus 12 in a CATV system, the subject invention may be utilized in a digital apparatus 12 in connection with other systems.

As part of a CATV system, the digital apparatus 12 is operative, adapted and/or configured to provide two-way communication between the digital apparatus 12 and the server/head-end 20 once the digital apparatus 12 is "recognized" or configured by the CATV system. Recognition or configuration of the digital apparatus 12 is accomplished through the input of various parameters or data (set-up parameters or data) into the digital apparatus 12. This is typically accomplished during an initial set-up or boot-up of the digital apparatus system. Such set-up parameters or data may be termed network configuration parameters or data. Thus, the digital apparatus 12 must go through a network parameter configuration mode upon initial installation and/or power-up. Once the network parameters are configured in the digital apparatus, the digital apparatus 12 is able to receive digital signals or receive and send digital signals from/to the head-end provider (i.e. server 20). As well, thereafter the head-end provider controls everything.

It should also be appreciated that the various signal inputs or sources depicted in Fig. 1 (as well as other, non-depicted signal inputs/sources) are not necessarily all coupled to a digital apparatus 14 at one time or even present in a given system with the digital apparatus 12. The system 10 thus represents various possible signal inputs/sources in which the digital apparatus may be utilized.

In accordance with an aspect of the subject invention, the digital apparatus 12 is configured, adapted and/or operative to generate auxiliary data and insert the auxiliary data into the analog video signals generated from the input digital video signals. As such, the display device 22 is configured, adapted and/or operative to receive and process the auxiliary data and, more particularly, display the auxiliary data. According to a feature of the subject invention, the auxiliary data is displayable as a set-up menu for input of parameters such as network parameters into the digital apparatus 12. These parameters are necessary to establish initial communication with a head-end provider, signal source, or the like. As such, the auxiliary data may be termed menu data. Particularly, the digital apparatus 12 is operative, adapted and/or configured to generate and provide in the outputted analog video signal, auxiliary data in the form of data inserted into a portion of the output signal from the digital apparatus. This output signal may be an analog video (television) signal and the portion of the output signal may be the vertical blanking interval. The vertical blanking interval is typically utilized to carry auxiliary data/information. Preferably, the auxiliary data is menu data in the form of closed caption (CC) data and/or tele-text data carried by the vertical blanking interval. The auxiliary data, however, may be carried by the output signal of the digital apparatus 12 in other manners.

The digital apparatus 12 is also operative, adapted and/or configured to receive digital data other than digital television signals. This digital data may include, but not be limited to, program guide data, software and/or software components for existing digital apparatus software, control data, and/or other types of data that allow the digital apparatus to operate appropriately for the type of digital apparatus and/or environment of use.

In one form, the digital apparatus 12 is a set-top box or apparatus such as a satellite receiver, a cable television (CATV) set-top box or receiver, a DSL set-top, or the like. Particularly, in one form, the digital apparatus 12 is a broadband or network-capable MPEG apparatus. The broadband capable MPEG apparatus 12 is coupled to a broadband connection (e.g. CATV and/or DSL network 16) wherein the server 20 is a head-end CATV/DSL facillity. In order to begin-communication between the network-capable MPEG apparatus 12 and the server 20, digital apparatus parameters (i.e. network parameters) need to be inputted into the digital apparatus 12. The input of such network parameters into the network-capable MPEG apparatus 12 is accomplished by the network-capable MPEG apparatus 12 in conjunction with the display 22. Particularly, the network-capable MPEG apparatus 12 generates menu (auxiliary) data and inserts the generated menu data into the output analog video signal.

Referring to Fig. 2, a general block diagram of the network-capable MPEG apparatus 12 is depicted. The network-capable MPEG apparatus 12 is shown coupled to the display device 22. The display 22 device includes a signal processor, signal processing circuitry/logic or the like 42 coupled to a display 44. The display may be a CRT, LCD screen, plasma screen, or any other video reproduction device. The signal processor 42 is operative, adapted and/or configured to receive an incoming analog video signal and extract the auxiliary (menu) data. The signal processor 42 is further operative, adapted and/or configured to utilize the extracted menu data to display a parameter set-up menu on the display 44 of the display device 22. This is accomplished via either the closed captioning portion of the signal processor 42 or the tele-text portion of the signal processor 42, depending on the format of the menu data.

Still referring to Fig. 2, the network-capable MPEG apparatus 12 receives digital video signals via a digital video input or digital video input means 30. The digital video input 30 is coupled to a digital video receiver or digital video receiving means 32 that is operative, adapted and/or configured to receive the digital video signal provided at the digital video input 30. The digital video receiver 32 is coupled to a digital video processor or digital video processing means 34 that is operative, adapted and/or configured to process the digital video signal including signal decompression and/or decoding. The digital video processor 34 is coupled to a digital to analog converter or digital to analog converter means 36. The digital to analog converter 36 is operative, adapted and/or configured to convert the digital video signals into analog video signals. The digital to analog converter 36 is coupled to a menu (auxiliary) data inserter or menu data inserter means 38. The menu data inserter 38 is operative, adapted and/or configured to insert menu (auxiliary) data into the analog video signal from the digital to analog converter 36. The analog video signal with inserted menu (auxiliary) data is then provided to a signal output or signal output means 40.

In one exemplary case, the menu data is closed caption data that is inserted by the menu data inserter 38 into the vertical blanking interval (VBI) of the analog video signal. In another exemplary case, the menu data is tele-text data that is inserted by the menu data inserter 38 into the VBI. In both cases, such insertion in the VBI is accomplished as is known in the art.

The signal output from the signal output 40 is provided to the display device 22. The display device 22 includes a display 44 such as a CRT, projection, plasma, LCD or the like and a signal processor 42. The signal processor 42 receives and processes the incoming analog video signal from the digital apparatus 12. Particularly, the signal processor, in addition to normal analog video signal processing, extracts and processes the menu data from analog video signal. More particularly, the menu data is processed according to the type thereof (i.e. closed caption or tele-text) and is accordingly provided to the display 44. The display device 22 should therefore be put in a closed caption and/or tele-text mode in order to show the set-up menu, generated from the menu data, on the display 44.

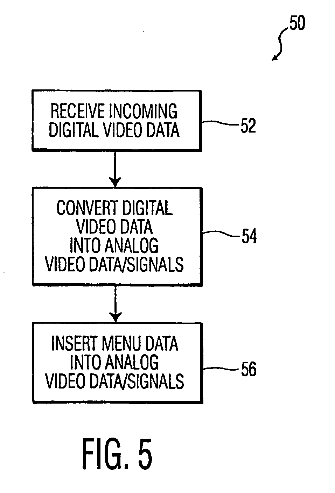

Referring to Fig. 5, there is depicted a flowchart, generally designated 50, of an exemplary manner of operation of the subject invention, particularly with respect to the embodiment depicted in Fig. 2, but which is applicable to all embodiments of the subject invention. As indicated in step 52, the digital apparatus 12 receives the incoming digital video data. The received digital video data is then converted into analog video data or signal, as indicated in step 54. The analog video data may be in the form of NTSC, PAL, or SECAM. Once the video data has been converted into an analog video signal, menu data is inserted into the analog video signal (particularly in the VBI thereof) as provided in step 56. The menu data is preferably inserted as closed caption or tele-text data. Particularly, the closed caption or tele-text data is inserted into the VBI of the analog video signal. In this manner, the display device 22 (e.g. television) can provide the closed caption or tele-text data in the form of a set-up menu. The set-up menu allows for the input of broadband or network parameters into the digital apparatus.

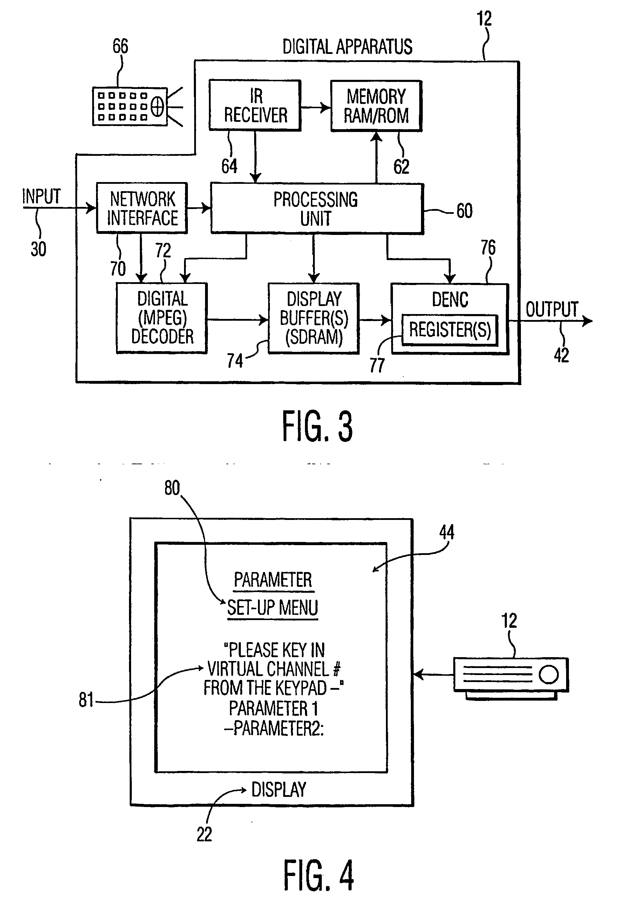

With reference now to Fig. 3, there is depicted another exemplary embodiment of a digital apparatus 12. The digital apparatus 12 is operative, adapted and/or configured to receive an incoming or input digital video signal, convert the digital video signal into an analog video signal, and provide auxiliary data (e.g. set-up menu data) into the analog video signal, the auxiliary data allowing a display device receiving the analog video signal to depict or present a set-up menu for assistance in the input of broadband and/or network parameters into the digital apparatus 12.

The digital apparatus 12 includes a processing unit, processor, processing means, central processing unit (CPU), processing circuitry/logic, and/or the like 60. Memory 62 is provided and coupled to the processing unit 60. The memory 62 represents both read only memory (ROM) and random access memory (RAM). The ROM may be in the form of programmable memory (PROM) such as EEPROM, flash memory, or other type of programmable read only memory (collectively "ROM"). The ROM is utilized to store boot-up (boot) program instructions (e.g. software) for use by the processing unit 60 (i.e. the digital apparatus 12). The boot programming includes program instructions and/or digital data to allow the digital apparatus to generate menu data and insert the generated menu data into the analog video signal. The RAM may be in the form of DRAM, SDRAM or the like (collectively "RAM"). The RAM is utilized to store the input broadband and/or network parameters. Once the digital apparatus 12 is initialized, the RAM may also store programming, data and other items that are downloaded from the head-end.

The digital apparatus 12 further includes an infrared (IR) receiver or receiver means 64 as part of an embodiment of a user input or user input means. The IR receiver 64 is operative, adapted and/or configured to receive commands (data) from a IR transmitter (remote) 66. It should be appreciated that the digital apparatus 12 may utilize other manners of user input such as input from a front panel of the digital apparatus 12, an RF transmitter/receiver, and/or the like. Data received from the remote 66 is provided and/or manipulated by the processing unit 60 to which the IR receiver 64 is coupled. In one form, the remote 66 transmits broadband and/or network parameters that are input into the remote by the user in response to the set-up menu generated by the digital apparatus 12 and provided to the display device 22. These broadband and/or network parameters are stored in the RAM 62.

Still referring to Fig. 3, the digital apparatus 12 has a network interface or network interface means 70 that is coupled to the signal input 30. The signal input 30 provides the digital video data/signal to the digital apparatus 12. The network interface 70 allows communication between the digital video data source (e.g. the head-end 20) and the digital apparatus 12. The network interface 70 is also preferably coupled to and/or under the control, at least partially, of the processing unit 60. The network interface 70 is coupled to a digital decoder or digital decoder means 72 that is also preferably coupled to and/or under the control, at least partially, of the processing unit 60. The digital decoder 72 is operative, adapted and/or configured to decode/decompress the digital video data. In one form, the digital decoder 72 is an MPEG decoder/decompressor. Of course, it should be appreciated that the digital decoder 72 may decode/decompress digitally coded/encoded signals of types other than MPEG.

The digital apparatus 12 also has a display buffer (encompassing multiple display buffers) or display buffer means 74 that is coupled to the digital decoder 72. The display buffer is also preferably coupled to and/or under the control, at least partially, of the processing unit 60. The display buffer is operative, adapted and/or configured to receive and temporarily store decompressed digital video data produced by the digital decoder 72. The display buffer may be portioned in the SDRAM.

The digital apparatus 12 further has a digital encoder (DENC) or digital encoder means 76 that is coupled to the display buffer 74. The DENC 76 is also preferably coupled to and/or under the control, at least partially, of the processing unit 60. The DENC 76 is operative, adapted and/or configured to take the decompressed digital video data from the display buffer 74 and convert the decompressed digital video data into appropriate analog video data or signal(s). The DENC 76 also has internal registers 77 that are operative, adapted and/or configured to receive digital data from the processing unit 60 that will be converted into closed caption (CC) or tele-text data in the VBI of the appropriate analog video signal. Particularly, the processing unit 60 through program instructions and/or data contained in the memory (boot ROM) 62, provides digital menu data to the registers 77 of the DENC 76 that is then inserted by the DENC 76 into the analog video signal. The menu data is converted by the DENC 76 into analog form such a CC or tele-text data in the VBI of the analog signal. The analog signal is provided at the signal output or signal output means 42.

Referring to Fig. 4, there is depicted the display device 22 coupled to the digital apparatus 12 in accordance with the present principles. An exemplary set-up menu 80 is shown on the display 44 of the display device 22. The set-up menu 80 is preferably in the form of closed captioning or tele-text of which the display device 44 is capable of processing and displaying. The menu 80 is shown having a title or header (i.e. "Parameter Set-up Menu") and character strings 81 that provide the instructions to the user. The character strings 81 provide the text to display in order for the user to input the set-up parameters (e.g. parameter 1 and parameter 2) into the digital apparatus 12.

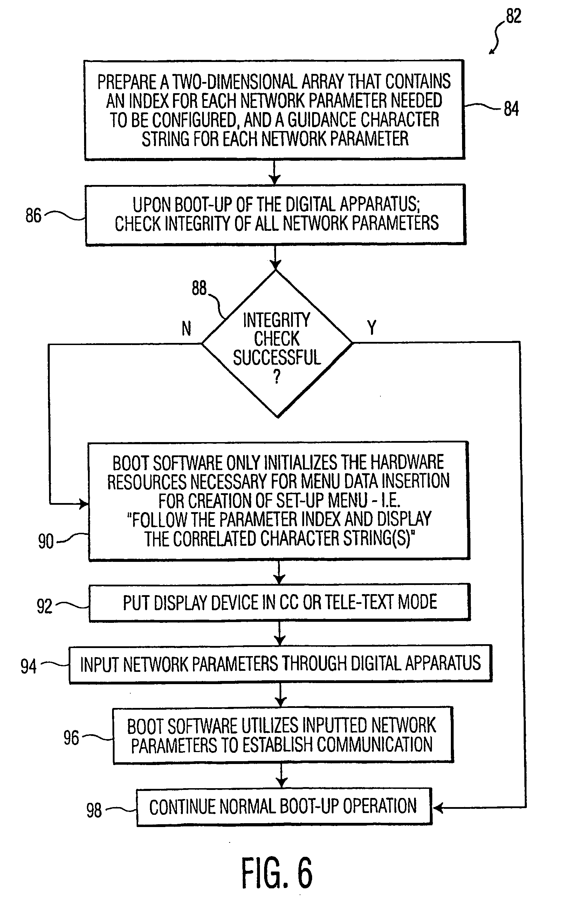

With reference now to Fig. 6, there is depicted a flowchart, generally designated 82, of another exemplary manner of operation of the subject invention, particularly with respect to the embodiment depicted in Fig. 3, but which is applicable to all embodiments of the subject invention. As indicated in step 84, the digital apparatus 12 has (or prepares in) with its memory, a two-dimensional array that contains an index for each network parameter needed to be configured, and a guidance character string for each network parameter. In step 86, upon boot-up of the digital apparatus 12, the digital apparatus makes a check of the integrity of network parameters. Particularly, the digital apparatus performs an integrity check that determines if the appropriate network parameters are (have been) stored in memory. In step 88, the digital apparatus makes the determination of whether the integrity check was successful. If the integrity check was successful (indicated by the "Y" for "Yes"), the appropriate network parameters are stored in the memory of the digital apparatus and the normal boot-up operation is continued, step 98. If, however, the integrity check was not successful (indicated by the "N" for "No"), then the program flow continues to step 90.

In step 90, the boot software only initializes the hardware resources of the digital apparatus 12 that is necessary for menu data insertion into the produced analog signal. The menu data insertion is for creation of a set-up menu on the display device 22. The boot software provides the necessary data to create the set-up menu and various character strings for display as directions or parameter input information such as "Follow the Parameter Index and Display The Correlated Character String(s)." In step 92, the display device is set to a closed caption (CC) mode or tele-text mode in order to process and display the menu data as a set-up menu utilizing the closed captioning or tele-text mode of the display device 22.

The network parameters are then input into the digital apparatus, step 94. The network parameters are directly inputted into the digital apparatus 12 such as via the remote 66 (see Fig. 3) at the prompting of the set-up menu 80. Thereafter, in step 96, the boot software utilizes the inputted network parameters to establish communication between the digital apparatus 12 and the head-end (server) 20. Normal boot-up operation, step 98, is then performed after network communication is established.

As a synopsis to the above, and in keeping with the example of a CATV apparatus and a head-end, the network or broadband-capable MPEG apparatus 12 needs some minimal initial network parameter configuration before it can properly communicate with the head-end service provider 20 to have the application software downloaded and start any user required service. This operation should be done in the boot ROM execution time. Since the boot ROM of this kind of apparatus or device has a very limited size, the software for the configuration and/or display functions is thus very compact.

The method according to the principles of the subject invention typically only requires a first time boot up, e.g. at the end user home site. During such a boot up routine, the network-capable MPEG apparatus 12 will generate the closed caption or tele-text on the display device 22. The display message (set-up menu) will guide the user or installer to enter the required network parameters. Once these required network parameters are properly placed in the non-volatile memory 62 of the network-capable MPEG apparatus 12, typically via a remote 66 and remote receiver 64 of the digital apparatus 12, the network-capable MPEG apparatus 12 can properly download the application software along with additional network configuration parameters from the head-end provider can properly download the application software along with additional network configuration parameters from the head-end provider can properly download the application software along with additional network configuration parameters from the head-end provider 20. After the above operation is successfully accomplished, the described method for message generation is preferably disabled.

In summation, the described system, apparatus and/or method is applicable to both closed caption and tele-text options for the parameter configuration supporting display. Currently, in North America the tele-text display feature may not be available on the conventional television set, but is available in Europe for instance. As indicated above, the subject invention involves generating closed caption and tele-text internal to a signal decoding apparatus for the special display purpose (parameter set-up). Of course, it should be appreciated that the special display purpose is not limited to parameter set-up and thus other special display purpose may use or take advantage of the principles of the subject invention.

In further summation, the described closed caption or tele-text display function guides the user or installer to configure, e.g. fundamental parameters to establish the initial communication with the head-end service provider. The display function is designed such that it displays any parameter that is sensitive to network security. After these fundamental parameters are configured, the display function is preferably disabled. From then on, the head-end service provider controls everything.

The subject invention dispenses with the need for a graphic library or a font library. The subject invention also does not need an external PC connection for the parameter configuration. Since the subject invention does not use a graphic library or a font library, there is not need to store these libraries in the internal non-volatile memory. This allows these libraries to be upgraded during the active service period of the apparatus.

The present system, apparatus and/or method provides at least the following advantages and/or features: 1) the system apparatus and/or method generates the closed caption or tele-text display message internal to the network-capable MPEG apparatus 12 to accomplish on-screen display for network parameter configuration; 2) the closed caption or tele-text message for the purpose described herein requires less than a hundred bytes of memory, which is in contrast to a font and/or graphic library needed for typical display application that will require approximately ten MB in memory size; 3) the closed caption or tele-text feature only requires several registers being set up because no transport engine or graphic engine hardware is required, and this further contributes to minimizing the software size for the subject invention; 4) the system, apparatus and/or method requires no PC access for the parameter configuration, so it will not cause any potential network security risks; and 5) the system, apparatus and/or method is totally independent from any graphic or font libraries and, therefore, is very beneficial to the head-end service provider when the service provider want to upgrade those components.

The system, apparatus and/or method generate the closed caption or tele-text display message internal to the network-capable MPEG apparatus to accomplish on-screen display for network parameter configuration. The closed caption or tele-text message for the purpose as described herein requires less than a hundred bytes of memory, which is significantly less than the approximately 10 MB of storage space required for a font and graphic library needed to implement a typical message display application.

## Claims

1. A method of assisting in the input of set-up parameters into an apparatus (12) comprising:
receiving incoming digital video data (52);
converting the digital video data into an analog video signal (54); and **characterized by**:
inserting menu data into a vertical blanking interval of the analog video signal (56), the menu data allowing a display device coupled to the apparatus to utilize the menu data to display a set-up menu for input of set-up parameters into the apparatus.

2. The method according to claim 1, wherein inserting menu data into a vertical blanking interval of the analog video signal (56) includes:
retrieving digital menu data stored in read only memory (86); and
utilizing a digital encoder (76) to combine the retrieved digital menu data with the analog video signal.

3. The method according to claim 2, wherein retrieving digital menu data stored in memory (86) includes retrieving digital menu data in read only boot memory.

4. The method according to claim 3, further comprising:
writing the retrieved digital menu data to registers of the digital encoder.

5. The method according to claim 1, wherein inserting menu data into a vertical blanking interval of the analog video signal (56) includes:
inserting menu data comprising one of closed caption menu data and tele-text menu data into the vertical blanking interval of the analog video signal (56).

6. The method according to claim 1, further comprising:
receiving set-up parameters into the apparatus (94).

7. An apparatus (12) comprising:
means for receiving digital video data (32);
means, coupled to the means for receiving digital video data, for converting the digital video data into an analog video signal (36);
means for generating menu data that is displayable by a display device as a parameter set-up menu for assisting in the input of set-up parameters into the apparatus (60/62); and
**characterized by**:
means, coupled to the means for generating menu data and the means for converting the digital video data into an analog video signal, for inserting the menu data into a vertical blanking interval of the analog video signal (38).

8. The apparatus (12) according to claim 7, wherein the means for generating menu data (60/62) comprises means for processing the menu data (60) in communication with means for storing (62) the processed menu data, the means for storing containing menu data generation software/data.

9. The apparatus (12) according to claim 8, wherein the means for generating menu data (60/62) is operative to insert menu data comprising one of closed caption menu data and tele-text menu data into the vertical blanking interval of the analog video signal.

10. The apparatus (12) according to claim 7, further comprising:
means for receiving network parameters (64) into the apparatus from a user.

11. The apparatus (12) according to claim 7, wherein the means for inserting menu data (38) includes digital encoder means (76).

12. The apparatus (12) according to claim 11, wherein the digital encoder means (76) include data register means (77) operative to receive generated menu data prior to insertion into the analog video signal.

## Patentansprüche

1. Verfahren zur Unterstützung bei der Eingabe von Einrichtungs-Parametern in eine Vorrichtung (12), umfassend:
Empfangen von ankommenden digitalen Videodaten (52);
Umwandeln der digitalen Videodaten in ein analoges Videosignal (54);
**gekennzeichnet durch:**
Einfügen von Menüdaten in eine vertikale Austastlücke des analogen Videosignals (56), wobei die Menüdaten einer mit der Vorrichtung verbundenen Anzeigevorrichtung erlauben, die Menüdaten zur Anzeige eines Einrichtungs-Menüs für die Eingabe von Einrichtungs-Parametern in die Vorrichtung zu verwenden.

2. Verfahren nach Anspruch 1, bei dem das Einfügen von Menüdaten in eine vertikale Austastlücke des analogen Videosignals (56) einschließt:
Wiedergewinnen von in einem Nur-Lese-Speicher (86) gespeicherten digitalen Menüdaten und Verwenden eines digitalen Kodierers (76) zum Kombinieren der wiedergewonnenen digitalen Menüdaten mit dem analogen Videosignal.

3. Verfahren nach Anspruch 2, bei dem die Wiedergewinnung der in dem Speicher (86) gespeicherten digitalen Menüdaten die Wiedergewinnung digitaler Menüdaten in einem Nur-Lese-Boot-Speicher einschließt.

4. Verfahren nach Anspruch 3, umfassend:
Schreiben der wiedergewonnenen digitalen Menüdaten in Register des digitalen Kodierers.

5. Verfahren nach Anspruch 1, bei dem das Einsetzen von Menüdaten in eine vertikale Austastlücke des analogen Videosignals (56) einschließt:
Einfügen von Menüdaten, die Untertitel-Menüdaten oder Teletext-Menüdaten umfassen, in die vertikale Austastlücke des analogen Videosignals (56).

6. Verfahren nach Anspruch 1, das den Empfang von Einrichtungs-Parametern in der Vorrichtung (94) umfasst.

7. Vorrichtung (12) umfassend:
Mittel zum Empfang digitaler Videodaten (32);
mit den Mitteln zum Empfang digitaler Videodaten verbundene Mittel zum Umwandeln der digitalen Videodaten in ein analoges Videosignal (36);
Mittel zum Erzeugen von Menüdaten, die von einer Anzeigevorrichtung als ein Parameter-Einrichtungsmenü zur Unterstützung der Eingabe von Einrichtungs-Parametern in die Vorrichtung (60, 62) anzeigbar sind;
**gekennzeichnet durch:**
mit den Mitteln zur Erzeugung von Menüdaten verbundene Mittel zur Umwandlung der digitalen Videodaten in ein analoges Videosignal, um die Menüdaten in eine vertikale Austastlücke des analogen Videosignals (38) einzufügen.

8. Vorrichtung (12) nach Anspruch 7, bei der die Mittel zum Erzeugen von Menüdaten (60, 62) Mittel zum Verarbeiten der Menüdaten (60) in Verbindung mit Mitteln zum Speichern (62) der verarbeiteten Menüdaten umfassen, wobei die Mittel zum Speichern Menüdaten-Erzeugungs-Software/Daten enthalten.

9. Vorrichtung (12) nach Anspruch 8, bei der die Mittel zum Erzeugen von Menüdaten (60/62) bewirken, in die vertikale Austastlücke des analogen Videosignals Menüdaten einzufügen, die Untertitel-Menüdaten oder Teletext-Menüdaten umfassen.

10. Vorrichtung (12) nach Anspruch 2, die Mittel zum Empfangen von Netz-Parametern (64) in der Vorrichtung von einem Benutzer umfassen.

11. Vorrichtung (12) nach Anspruch 7, bei der die Mittel zum Einfügen von Menüdaten (38) digitale Kodierermittel (76) enthalten.

12. Vorrichtung (12) nach Anspruch 1, bei der die digitalen Kodierermittel (76) Datenregistermittel (77) enthalten, die bewirken, dass erzeugte Menüdaten vor der Einfügung in das analoge Videosignal empfangen werden.

## Revendications

1. Procédé pour aider à entrer les paramètres de réglage dans un appareil (12) comprenant :
la réception de données vidéo numériques entrantes (52) ;
la conversion des données vidéo numériques en un signal vidéo analogique (54) ; et
**caractérisé par** :
l'insertion de données de menu dans un intervalle de suppression verticale du signal vidéo analogique (56), les données de menu permettant à un dispositif d'affichage couplé à l'appareil d'utiliser les données de menu pour afficher un menu de réglage afin d'entrer des paramètres de réglage dans l'appareil.

2. Procédé selon la revendication 1, dans lequel l'insertion de données de menu dans un intervalle de suppression verticale du signal vidéo analogique (56) inclut:
la récupération de données de menu numériques stockées dans une mémoire morte (86) ; et
l'utilisation d'un encodeur numérique (76) pour combiner les données de menu numériques récupérées et le signal vidéo analogique.

3. Procédé selon la revendication 2, dans lequel la récupération de données de menu numériques stockées dans la mémoire (86) inclut la récupération de données de menu numériques dans une mémoire morte d'amorçage.

4. Procédé selon la revendication 3, comprenant en outre :
l'écriture des données de menu numériques récupérées sur des registres de l'encodeur numérique.

5. Procédé selon la revendication 1, dans lequel l'insertion de données de menu dans un intervalle de suppression verticale du signal vidéo analogique (56) inclut :
l'insertion de données de menu comprenant une des données de menu de sous-titrage codées et des données de menu télétextes dans l'intervalle de suppression verticale du signal vidéo analogique (56).

6. Procédé selon la revendication 1, comprenant en outre :
la réception de paramètres de réglage dans l'appareil (94).

7. Appareil (12) comprenant :
un moyen de réception des données vidéo numériques (32) ;
un moyen, couplé au moyen de réception de données vidéo numériques, de conversion des données vidéo numériques en un signal vidéo analogique (36) ;
un moyen de génération de données de menu pouvant être affichées par le biais d'un dispositif d'affichage comme un menu de réglage des paramètres pour aider à l'entrée des paramètres de réglage dans l'appareil (60/62); et
**caractérisé par** :
un moyen, couplé au moyen de génération de données de menu et au moyen de conversion des données vidéo numériques en un signal vidéo analogique, d'insertion des données de menu dans un intervalle de suppression verticale du signal vidéo analogique (38).

8. Appareil (12) selon la revendication 7, dans lequel le moyen (60/62) de génération de données du menu comprend un moyen de traitement des données de menu (60) communiquant avec un moyen de stockage (62) des données de menu traitées, le moyen de stockage contenant un logiciel/des données de génération de données de menu.

9. Appareil (12) selon la revendication 8, dans lequel le moyen (60/62) de génération des données de menu permet d'insérer des données de menu comprenant une des données de menu de sous-titrage codées et des données de menu télétextes dans l'intervalle de suppression verticale du signal vidéo analogique.

10. Appareil (12) selon la revendication 7, comprenant en outre :
un moyen de réception de paramètres réseau (64) dans l'appareil depuis un utilisateur.

11. Appareil (12) selon la revendication 7, dans lequel le moyen d'insertion de données(38) de menu comprend un moyen (76) d'encodage numérique.

12. Appareil (12) selon la revendication 11, dans lequel le moyen(76) d'encodage numérique comprend un moyen (77) de registre de données permettant de recevoir des données de menu générées avant une insertion dans le signal vidéo analogique.
